# EUROPEAN PATENT SPECIFICATION

(11) **EP 4 097 055 B1**
(45) Date of publication and mention of the grant of the patent: **05.03.2025**
(21) Application number: 21702962.8
(22) Date of filing: 29.01.2021
(51) Int. Cl.: C03B 1/00, C03C 1/02, C03C 13/06, C03B 5/235, C03C 3/097

(54) **METHOD FOR MAKING MAN-MADE VITREOUS FIBRES**
VERFAHREN ZUR HERSTELLUNG VON KÜNSTLICHEN GLASFASERN
PROCÉDÉ DE FABRICATION DE FIBRES VITREUSES MANUFACTURÉES

(30) Priority: 30.01.2020 EP 20154747
(43) Date of publication of application: 07.12.2022
(73) Proprietor: ROCKWOOL A/S, 2640 Hedehusene (DK)
(72) Inventor: HANSEN, Lars Elmekilde, 2640 Hedehusene (DK); LARSEN, Ejvind Voldby, 2640 Hedehusene (DK)
(74) Representative: Gill Jennings & Every LLP
(86) International application number: PCT/EP2021/052196
(87) International publication number: WO 2021/152141

(56) References cited:
- WO-A1-99/28247
- WO-A1-99/28250
- WO-A1-99/28252
- CN-A- 109 809 700

## Description

### FIELD OF INVENTION

The invention relates to a process for making man-made vitreous fibres (MMVF) using a gas-fired furnace to melt mineral charge.

### BACKGROUND

The invention concerns methods of making MMVF and consolidated MMVF products such as insulation products. Generally, mineral raw material (mineral charge) with the desired overall chemical composition is melted in a furnace, the mineral melt is removed and fed to a fiberizing apparatus such as an external or internal centrifugation apparatus, and the fibres are collected, further processed if necessary and formed into batts, usually with a binder.

In the prior art it is common to use either an electric furnace or a coal-fired furnace.

Some electric furnaces may be combined with the provision of gaseous fuel and combustion gas.

It is desirable to switch from coal-fired to gas-fired furnaces for environmental benefits. For example, gaseous fuel can be sourced as biogas which can be carbon-neutral. In addition, gaseous fuel may become cheaper than coal due to carbon tax and less exhaust gas scrubbing or other abatement systems is required for gas-fired furnaces than for coal-fired furnaces.

When using a coal-fired furnace to produce mineral melt for fibres, the resulting consolidated MMVF products have shrinkage in an acceptable range in high-temperature or fire conditions, usually less than 40% shrinkage by area. Shrinkage should be avoided or at least reduced where possible, because thermal bridges and insulation gaps can form when a consolidated MMVF product shrinks in a high-temperature scenario.

The inventors found that the degree of shrinkage of consolidated MMVF products was above the acceptable range when using MMVF derived from a gas-fired furnace.

It is essential to solve this problem to realise the environmental benefits of gas over coal as fuel whilst maintaining product performance and safety.

WO 9928250 describes processes for the production of man-made vitreous fibres (MMVF) utilizing waste material. The waste material includes inorganic waste which may contain aluminium dross comprising metallic aluminium.

WO 9928247 describes processes for the production of man-made vitreous fibres (MMVF) utilizing waste material in a shaft furnace.

CN 109809700 describes a method of producing inorfil using industrial solid waste including aluminium ash.

### SUMMARY

The inventors solved the problem of shrinkage of consolidated MMVF products derived from gas-fired furnaces with the method of claim 1.

The metallic aluminium may be in the form of aluminium granulate. Aluminium granulate comprises primarily metallic aluminium, with an outer layer of aluminium oxide due to exposure to oxygen. Aluminium granulate according to the invention comprises from 45 wt% metallic aluminium to 100 wt% metallic aluminium, such as to 99.5 wt% or to 99 wt% metallic aluminium.

It is preferred in the method to directly inject the aluminium granulate either directly into or just above the melt pool in the furnace. The metallic aluminium in aluminium granulate would otherwise be oxidised too much prior to melting and contact with Fe₂O₃, thereby removing the thermal and redox benefits of including metallic Al as part of the mineral charge. Direct injection of aluminium granulate either directly into or just above the melt pool is especially preferred in a cyclone furnace, where the other mineral component is melted in the cyclone, unlike other furnace types where all solid batch material may be melted in the melt pool.

The other suitable form for the metallic aluminium is one or more blocks. Blocks may take any suitable form, for example rods, bars, lumps, or another shape. Blocks according to the invention comprise from 45 to 100 wt% metallic aluminium. A rod or other block shape of metallic aluminium may be inserted directly into the mineral melt in the furnace. This method avoids excessive or premature oxidation of the metallic aluminium prior to mixing with the mineral melt pool, thereby improving the efficiency of the process. Aluminium blocks used in the invention may comprise primarily metallic aluminium, with an outer layer of aluminium oxide formed due to exposure to oxygen. Without wishing to be bound by theory, it is believed that blocks of aluminium, included directly into the melt or added to the furnace a short distance above the melt pool, melt and form droplets, which interact with the rest of the mineral melt to form a reducing environment as the metallic aluminium oxidises. Nevertheless, the point at which Al blocks are added to the furnace is not restricted and Al blocks may, for example, be inserted into the top of the furnace.

The metallic Al preferably makes up from 0.1 to 0.5 wt% of the total mineral charge, such as 0.2 to 0.4 wt% or about 0.2 wt% of the total mineral charge, measured as content of metallic aluminium.

Another benefit of including metallic Al directly into or immediately above the mineral melt pool in the furnace is that oxidation of Al is more exothermic than burning coal, so an additional heating effect is observed in the invention due to the addition of metallic Al.

When a cyclone furnace is used, the Al granulate is preferably added directly into the melt pool, or just above the melt pool. Preferably it is added by means of a burner or lance. Preferably, an oxyfuel burner having a central pipe for transport of the Al granulate is used.

The Al granulate may be added above the surface of the melt pool and at a point within 50 cm of the surface of the melt pool, preferably 30 cm.

Al granulate can be added alone, as a raw material component that comprises only Al granulate. Alternatively it can be pre-mixed with filler and the blend of Al granulate and filler added to the furnace as a blended raw material component. Suitable fillers include various raw materials that could be the additional raw materials used. For example, Al granulate may be mixed with filter fines (i.e. fine particulate raw material extracted from the exhaust filter of the cyclone furnace) prior to injection into the cyclone furnace. Suitable percentages of Al granulate in the blend with filler are 1 to 90%, such as 10 to 70%, such as 15 to 50%. Using a blend of Al granulate and other raw materials can improve dosing control of metallic aluminium in the process.

Al granulate mixes well with the mineral melt due to similar densities of the melt and metallic aluminium.

The particle size (mean particle diameter, wherein particle diameter is taken to mean the largest dimension of a particle regardless of whether or not the particle is spherical) of the Al granulate may be no greater than 15 mm, such as less than 10 mm, such as less than 5 mm. In a preferred embodiment, the particle size (mean particle diameter, wherein particle diameter is taken to mean the largest dimension of a particle regardless of whether or not the particle is spherical) of the granulated Al may be no greater than 3 mm, such as less than 2 mm, such as less than 1 mm

The residence time of particulate mineral material and of the mineral melt in a cyclone furnace is lower than in other types of mineral-melting furnaces and so fast reaction kinetics are important in this method.

When a tank furnace is used, larger blocks of metallic aluminium may be used than is possible with a cyclone furnace.

The total mineral charge, the mineral melt and the MMVF should have an amount of iron oxide at least 3 wt%.

In the invention, the mineral raw material may comprise from 0.1 to 0.5 wt% metallic aluminium.

In preferred embodiments the MMVF have the following levels of elements, calculated as oxides in wt%:
SiO₂: at least 30, 32, 35 or 37; not more than 51, 48, 45 or 43
CaO: at least 8 or 10; not more than 30, 25 or 20
MgO: at least 2 or 5; not more than 25, 20 or 15
FeO (including Fe₂O₃): at least 4 or 5; not more than 15, 12 or 10
FeO+MgO: at least 10, 12 or 15; not more than 30, 25 or 20
Na₂O+K₂O: zero or at least 1; not more than 10
CaO+Na₂O+K₂O: at least 10 or 15; not more than 30 or 25
TiO₂: zero or at least 1; not more than 6, 4 or 2
TiO₂+FeO: at least 4 or 6; not more than 18 or 12
B₂O₃: zero or at least 1; not more than 5 or 3
P₂O₅: zero or at least 1; not more than 8 or 5
Others: zero or at least 1; not more than 8 or 5

The fibres preferably have sintering temperature above 800 °C, more preferably above 1000 °C.

The MMVF made by the method of the invention preferably have the composition in wt%:

| | |
|---|---|
| SiO₂ | 35 to 50 |
| Al₂O₃ | 12 to 30 |
| TiO₂ | up to 2 |
| Fe₂O₃ | 3 to 12 |
| CaO | 5 to 30 |
| MgO | up to 15 |
| Na₂O | 0 to 15 |
| K₂O | 0 to 15 |
| P₂O₅ | up to 3 |
| MnO | up to 3 |
| B₂O₃ | up to 3 |

Another preferred composition for the MMVF is as follows in wt%:
SiO₂ 39-55% preferably 39-52%
Al₂O₃ 16-27% preferably 16-26%
CaO 6-20% preferably 8-18%
MgO 1-5% preferably 1-4.9%
Na₂O 0-15% preferably 2-12%
K₂O 0-15% preferably 2-12%
R₂O (Na₂O + K₂O) 10-14.7% preferably 10-13.5%
P₂O₅ 0-3% preferably 0-2%
Fe₂O₃ (iron total) 3-15% preferably 3.2-8%
B₂O₃ 0-2% preferably 0-1%
TiO₂ 0-2% preferably 0.4-1%
Others 0-2.0%.

This composition may suitably be used with an internal centrifugation apparatus as the fiberizing apparatus.

A preferred range of SiO₂ is 39-44%, particularly 40-43%. A preferred range for CaO is 9.5-20%, particularly 10-18%.

Al₂O₃-content is preferably between 16 and 27%, preferably greater than 17% and/or preferably less than 25%, and the sum of SiO₂ and Al₂O₃ is preferably between 57 and 75%, preferably greater than 60% and/or preferably less than 72%. The quantity of alkali metal (sodium and potassium) oxides (R₂O) in this fibre composition is preferably relatively high but limited to between 10-14.7%, preferably 10 and 13.5%, with magnesia in an amount of at least 1%.

Preferably, Al₂O₃ is present in an amount of 17-25%, particularly 20-25%, in particular 21-24.5% and especially around 22-23 or 24% by weight. Advantageously, the magnesia content is at least 1.5%, in particular 2% and preferably 2-5% and particularly preferably >2.5% or 3%.

In the case that Al₂O₃ is present in an amount of at least 22% by weight, the amount of magnesia is preferably at least 1%, advantageously around 1-4%, preferably 1-2% and in particular 1.2-1.6%. The content of Al₂O₃ is preferably limited to 25% in order to preserve a sufficiently low liquidus temperature. When the content of Al₂O₃ is present in a lower amount of for example around 17-22%, the amount of magnesia is preferably at least 2%, especially around 2-5%.

The total amounts of the oxides of Fe and Mg are important for controlling the shrinkage of MMVF insulation. Furthermore the ratio of Fe(ll):Fe(lll) impacts the performance of MMVF insulation in a fire situation, where oxidation of Fe(ll) to Fe(III) is a beneficial process.

Advantageously the fibres have a ratio of Fe(ll):Fe(lll) of above 2, such as above 3. The proportion of Fe(3+), based on total Fe in the melt, prior to the fiberisation step, and in the MMVF is generally less than 5%, preferably less than 3%. This aids in shrinkage prevention.

The amount of Fe(2+) and Fe(3+) can be determined using the Mössbauer method described in "The ferric/ferrous ratio in basalt melts at different oxygen pressures", Helgason et al, Hyperfine Interact., 45 (1989) pp 287-294.

The amount of total iron in the overall melt or fibre composition, based on total oxides in the melt or fibres, is calculated as Fe₂O₃. This is a standard means of quoting the amount of iron present in such an MMVF, a charge or a melt. The actual weight percentage of FeO and Fe₂O₃ present will vary based on the iron oxide ratio and/or redox state of the melt. As an example:

**Table 1**

| **Fe(3+)** | **Fe(2+)^{/}Fe(3+) = 80/20** | | **Fe(2+)/Fe(3+) = 97/3** | |
|---|---|---|---|---|
| **Fe₂O₃** | **FeO** | **Fe₂O₃** | **FeO** | **Fe₂O₃** |
| w/w% | w/w% | w/w% | w/w% | w/w% |
| Fe₂O₃ | FeO | Fe₂O₃ | FeO | Fe₂O₃ |
| 3 | 2.2 | 0.6 | 2.6 | 0.09 |
| 4 | 2.9 | 0.8 | 3.5 | 0.12 |
| 5 | 3.6 | 1.0 | 4.4 | 0.15 |
| 6 | 4.3 | 1.6 | 5.2 | 0.18 |
| 7 | 5.0 | 1.4 | 6.1 | 0.21 |
| 8 | 5.8 | 1.6 | 7.0 | 0.24 |

The skilled person will therefore understand that the actual weight percentage of the iron oxides present will be dependent on the ratio of Fe(2+) to Fe(3+).

The mineral melt formed in the method may be formed into MMVF using any suitable method, such as internal centrifugation or external centrifugation. Suitable fibre spinning methods and apparatus are known to those skilled in the art.

The process of the invention may further comprise consolidating the MMVF to form a consolidated product comprising the MMVF. Consolidated products can be used in many applications, including fire-rated insulation products. In such applications, the reduction of shrinkage is particularly beneficial as it reduces the risk of formation of thermal bridges or insulation gaps in a critical situation.

The total amount of iron oxide in the fibres may be a mixture of FeO and Fe₂O₃, but is quoted as Fe₂O₃ here, according to convention.

The method of the invention may be beneficially used with all types of gas-fired furnace for melting mineral raw material. Preferred types of gas-fired furnace are tank furnaces and cyclone furnaces. The heating from combustion of the gaseous fuel may be supplemented by heating using electrodes, such as Joule heating from submerged molybdenum electrodes.

When Al granulate is used, it is preferably added into or directly above the melt pool to avoid premature oxidation of the metallic Al contained within the granules. The aluminium granulate may be injected into the furnace using a burner or lance. Preferably, a oxyfuel burner having a central pipe for transport of the Al granulate is used.

Aluminium in block form is preferably added to the melt pool separately from the other mineral component. In a cyclone furnace, the other mineral component is typically particulate and melted in the cyclone, whereas the aluminium blocks melt primarily in the melt pool.

The particle size (mean particle diameter, wherein particle diameter is taken to mean the largest dimension of a particle regardless of whether or not the particle is spherical) of the Al granulate may be no greater than 15 mm, such as less than 10 mm, such as less than 5 mm. In a preferred embodiment, the particle size (mean particle diameter, wherein particle diameter is taken to mean the largest dimension of a particle regardless of whether or not the particle is spherical) of the granulated Al may be no greater than 3 mm, such as less than 2 mm, such as less than 1 mm.

The aluminium granulate typically comprises from 50 to 95 wt% metallic Al, such as about 90 wt% metallic Al. Al blocks may comprise up to 100 wt% metallic Al, such as up to 99 wt% metallic Al, due to the lower surface area to volume ratio of a block compared to a small granule, and hence less surface oxidation of Al.

Solid Al granulate added directly to a melt pool mixes well with the mineral melt due to similar densities of the mineral melt and metallic aluminium.

The gaseous fuel may be natural gas, methane, propane, biogas (methane derived from biological sources), or any other suitable carbonaceous gaseous fuel. Preferably the gaseous fuel is natural gas or biogas, most preferably biogas.

In the method, the combustion gas comprises oxygen to complete combustion of the fuel. The combustion gas may be air in its natural composition, pure oxygen, or oxygen-enriched air.

The raw materials used as the remainder of the mineral charge can be selected from a variety of sources, as is known. These include basalt, diabase, nepheline syenite, glass cullet, bauxite, quartz sand, limestone, rasorite, sodium tetraborate, dolomite, soda, olivine sand, potash. Waste materials may also be used.

The MMV fibres may be made from the mineral melt in conventional manner. Generally they are made by a centrifugal fibre-forming process.

For instance the fibres may be formed by a spinning cup process in which they are thrown outwardly through perforations in a spinning cup. The melt is fiberised by the spinning cup technology (also sometimes described as internal centrifugation). The melt preferably has a temperature at the end of the feeder channel in the range 1260 °C -1300 °C before it is led to the spinning cup. The melt preferably cools down when it is transferred from the feeder channel to the internal part of the spinning cup in such a way that the temperature for the melt when flowing through the perforations of the spinning cup is in the range 1150 °C - 1220 °C.

The viscosity of the melt in the spinning cup is in the range of 50 to 400 Pa.s, preferably 100 to 320 Pa s, more preferably 150 - 270 Pa.s. If the viscosity is too low, fibres of the desired thickness are not formed. If the viscosity is too high, the melt does not flow through the apertures in the spinning cup at the right pull rate, which can lead to blocking of the apertures in the spinning cup.

The melt is preferably fiberised by the spinning cup method at a temperature between 1160 and 1210 °C. The viscosity of the melt is preferably in the range 100-320 Pa.s at the spinning temperature.

In an alternative fibre-forming method, melt may be thrown off a rotating disc and fibre formation may be promoted by blasting jets of gas through the melt.

In a preferred method fibre formation is conducted by pouring the melt onto the first rotor in a cascade spinner. Preferably in this case the melt is poured onto the first of a set of two, three or four rotors, each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The MMVF may be collected and consolidated to form a consolidated product comprising the MMVF. Typically such product may comprise additional ingredients such as binder, with MMVF being the major component. The fibres resulting from the spinning process are preferably collected on a conveyor belt. Binder can be applied to the MMVF either during the fiberisation process, or post fiberisation. The binder may be applied by spraying the MMVF. Conventional types of binder for use with stone wool fibres may be used. The binder is then cured to produce a final product. The MMVF with binder is generally cured in a curing oven, usually by means of a hot air stream. The hot air stream may be introduced into the MMVF with binder from below, or above or from alternating directions in distinctive zones in the length direction of the curing oven. After curing, the cured binder composition binds the fibres to form a structurally coherent matrix of fibres.

The MMVF may be consolidated after collection, for instance by cross-lapping and/or longitudinal compression and/or vertical compression, in known manner. Usually consolidation occurs prior to curing of binder.

The MMVF produced by the method of the present invention, and the MMVF of the invention, have excellent fire resistance at 1000 °C. The MMVF can be made into a product for use in any of the conventional applications for MMVF, such as sound or heat insulation or fire protection. Such products include insulation products such as batts, granulate, boards, rolls, pipe sections, and other products such as tiles and loose fibres. The product may be used in high temperature environments, such as at least 400°C up to 1000°C.

The product may have any of the densities known in the art for the relevant application. For instance it may be in the range 20 to 1200 kg/m³, preferably 20 to 300 kg/m³, more preferably 20 to 150 kg/m³. Shrinkage benefits are seen for all product types, but it is observed that especially good shrinkage reduction is seen when the density of the product is relatively low, for instance not more than 50 kg/m³.

### BRIEF DESCRIPTION OF DRAWINGS

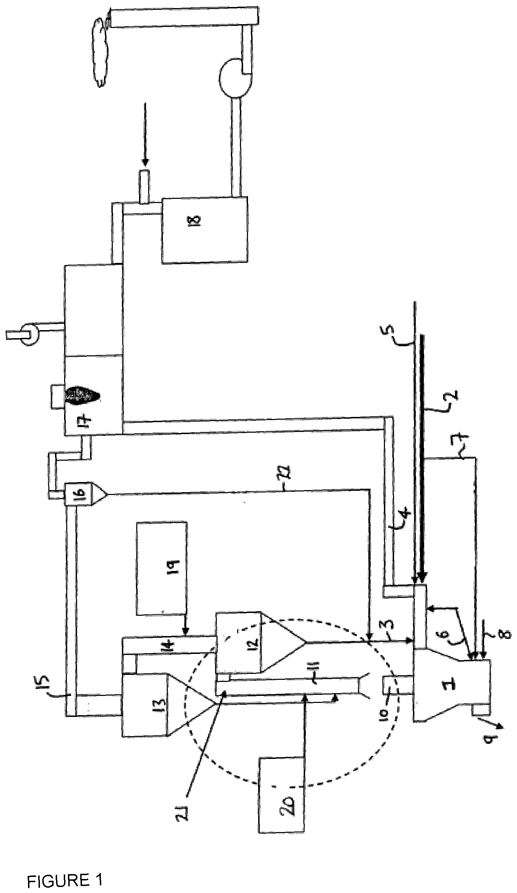

Figure 1 is a schematic diagram of a cyclone furnace used in an embodiment of the invention.

### DETAILED DESCRIPTION

Figure 1 shows a cyclone furnace 1 which comprises a cylindrical top section, a frustoconical bottom section and a cylindrical base section. Preheated mineral material (with or without the metallic aluminium) is introduced into the cyclone furnace via a mixed mineral material conduit 3. The fuel is introduced via conduit 2. The mineral material is introduced together with combustion air via conduit 4 and secondary air which is provided in compressed air supply 5 and is introduced through a lance (not shown) into the cyclone furnace to ensure thorough mixing of the fuel with the combustion air and to sustain the circulating motion of the combustion gases and suspended material in the cyclone furnace 1. A minor amount of combustion gas and fuel are diverted from the main feed which leads to the top section of the cyclone furnace, to the bottom section of the cyclone furnace via routes which are shown in Figure 1 as 6 and 7 respectively. Secondary fuel, such as natural gas, is also injected through supply 8 into the base section of the cyclone furnace, shown in Figure 1 as 8.

The fuel is combusted in the combustion gas, which is preferably pure oxygen or oxygen-enriched air, in the cyclone furnace, thereby melting the mineral charge.

The metallic aluminium is preferably directly to the cyclone furnace 1. Metallic aluminium could be provided as aluminium granulate and added at location 8 via an oxy-fines burner. The remainder of the mineral charge is provided from silo 19 and preheated as described above. Alternatively, metallic aluminium could be provided in block form, shaped as a rod, bar, or lump. Block form aluminium is preferably added to the cyclone furnace separately from particulate mineral raw material and may be added directly to the melt pool. Smaller Al blocks may be injected into the furnace via burner ports. Larger Al blocks may be injected into the furnace from an inlet in the top of the furnace. Bulk aluminium may be blown or otherwise injected directly into the melt pool at the base of the furnace; this may be preferable to minimise oxidation of aluminium in the circulating gases within the furnace, thereby maximising the effect of the metallic aluminium interacting with the other mineral components.

The mineral charge is melted in the cyclone furnace 1 and the resultant mineral melt is collected in the base zone of the cyclone furnace 1 and exits the furnace via outlet 9. The exhaust gases that are generated from combustion of the fuel are fed through flue 10 at the top of the circulating combustion chamber to the first conduit 11 where they are used to heat the mineral materials. The exhaust gases then flow to a first cyclone preheater 12 where they are separated from the mineral charge. The exhaust gases flow from the first cyclone preheater 12 to the second cyclone preheater 13 via a second conduit 14. Following the second cyclone preheater 13 the exhaust gases flow through conduit 15 to a dust cyclone 16 and into a chamber 17 where indirect heat exchange with the combustion gas occurs to preheat the combustion gas. The exhaust gases are then treated to make them safe to pass to the atmosphere such as by filter 18 and a DeSOx plant.

Some of the mineral charge may be carried up with the exhaust gases from the second cyclone preheater 13 through conduit 15. This is separated from the exhaust gases in dust cyclone 16 and recycled back to join the preheated mineral materials via conduit 22.

The exhaust gases leave the circulating combustion chamber via a flue10. The exhaust gases enter the first conduit 11 and are quenched from a temperature of between 1500 and 1900 °C, usually around 1650 °C to a temperature of between 900 and 1200 °C, normally around 1100 °C by quenching air. The provision of hot exhaust gases at temperatures greater than 800 °C is beneficial in particular when there is a need to remove ammonia from alu-dross prior to melting.

The raw materials used as the remainder of the mineral charge can be selected from a variety of sources, as is known. These include basalt, diabase, nepheline syenite, glass cullet, bauxite, quartz sand, limestone, rasorite, sodium tetraborate, dolomite, soda, olivine sand, potash. Waste materials may also be used.

The MMV fibres may be made from the mineral melt in conventional manner. Generally they are made by a centrifugal fibre-forming process.

For instance the fibres may be formed by a spinning cup process in which they are thrown outwardly through perforations in a spinning cup. The melt is fiberised by the spinning cup technology (also sometimes described as internal centrifugation). The melt preferably has a temperature at the end of the feeder channel in the range 1260 °C -1300 °C before it is led to the spinning cup. The melt preferably cools down when it is transferred from the feeder channel to the internal part of the spinning cup in such a way that the temperature for the melt when flowing through the perforations of the spinning cup is in the range 1150 °C - 1220 °C.

The viscosity of the melt in the spinning cup is in the range of 50 to 400 Pa.s, preferably 100 to 320 Pa s, more preferably 150 - 270 Pa.s. If the viscosity is too low, fibres of the desired thickness are not formed. If the viscosity is too high, the melt does not flow through the apertures in the spinning cup at the right pull rate, which can lead to blocking of the apertures in the spinning cup.

The melt is preferably fiberised by the spinning cup method at a temperature between 1160 and 1210 °C. The viscosity of the melt is preferably in the range 100-320 Pa.s at the spinning temperature.

In an alternative fibre-forming method, melt may be thrown off a rotating disc and fibre formation may be promoted by blasting jets of gas through the melt.

In a preferred method fibre formation is conducted by pouring the melt onto the first rotor in a cascade spinner. Preferably in this case the melt is poured onto the first of a set of two, three or four rotors, each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The MMVF may be collected and consolidated to form a consolidated product comprising the MMVF. Typically such product may comprise additional ingredients such as binder, with MMVF being the major component. The fibres resulting from the spinning process are preferably collected on a conveyor belt. Binder can be applied to the MMVF either during the fiberisation process, or post fiberisation. The binder may be applied by spraying the MMVF. Conventional types of binder for use with stone wool fibres may be used. The binder is then cured to produce a final product. The MMVF with binder is generally cured in a curing oven, usually by means of a hot air stream. The hot air stream may be introduced into the MMVF with binder from below, or above or from alternating directions in distinctive zones in the length direction of the curing oven. After curing, the cured binder composition binds the fibres to form a structurally coherent matrix of fibres.

The MMVF may be consolidated after collection, for instance by cross-lapping and/or longitudinal compression and/or vertical compression, in known manner. Usually consolidation occurs prior to curing of binder.

The MMVF produced by the method of the present invention, and the MMVF of the invention, have excellent fire resistance at 1000 °C. The MMVF can be made into a product for use in any of the conventional applications for MMVF, such as sound or heat insulation or fire protection. Such products include insulation products such as batts, granulate, boards, rolls, pipe sections, and other products such as tiles and loose fibres. The product may be used in high temperature environments, such as at least 400°C up to 1000°C.

The product may have any of the densities known in the art for the relevant application. For instance it may be in the range 20 to 300 kg/m³. Shrinkage benefits are seen for all product types, but it is observed that especially good shrinkage reduction is seen when the density of the product is relatively low, for instance not more than 50 kg/m³.

### EXAMPLE

Reference samples of consolidated MMVF products were prepared from a mineral melt (reference charge) having the following composition:

**Table 2**

| SiO₂ | Al₂O₃ | TiO₂ | Fe₂O₃ | FeO | CaO | MgO | Na₂O | K₂O | P₂O₅ | MnO |
|---|---|---|---|---|---|---|---|---|---|---|
| 42,6 | 18,5 | 0,5 | 6,9 | 0,0 | 18,9 | 9,2 | 1,9 | 0,8 | 0,2 | 0,5 |

The reference consolidated products were manufactured to a density of 30 kg/m³. The mineral melt was prepared in a cyclone furnace in accordance with Figure 1.

Invention samples of consolidated MMVF products were manufactured using MMVF spun from a mineral charge having the composition of Table 2 with the addition of 0.4 wt% Al granulate (equivalent to 0.2 wt% metallic Al). The added Al granulate was in addition to all of the components listed in Table 2. The densities of the example products were also 30 kg/m³.

The area shrinkage of the reference products and the example products was measured according to an internal test method consisting of 5 steps:
1) cutting, measuring and weighing test specimens from product test unit;
2) selecting representative test specimens from test unit;
3) removing binder at 590 °C;
4) sintering test specimens at 1000 °C +/- 20 °C for 30 minutes; and
5) Measure area of sintered test specimen.

The shrinkage is measured as a % reduction in surface area of each product. The major face of each product that is measured for shrinkage is equivalent to the major face that would be apparent in a finished product. For example, the reduction in length and width of a slab, but not its thickness, is measured.

Relative area shrinkage between raw material charge with and without addition of aluminium granulate

**Table 3 - aluminium granulate tests**

| **Sample Number** | **Shrinkage of reference samples** | **Shrinkage of invention samples** |
|---|---|---|
| 1 | 87,7 | 72,7 |
| 2 | 103,6 | 79,0 |
| 3 | 83,7 | 75,0 |
| 4 | 117,6 | |
| 5 | 107,6 | |
| **Normalised average shrinkage** | **100,0** | **75,6** |

## Claims

1. A process for making man-made vitreous fibres (MMVF) which comprise at least 3 wt% iron oxides determined as Fe₂O₃, comprising
providing a gas-fired furnace, mineral raw material, gaseous fuel and combustion gas,
wherein the mineral raw material comprises (a) metallic aluminium and (b) other mineral component,
introducing the mineral raw material, gaseous fuel and combustion gas to the furnace,
combusting the gaseous fuel, thereby melting the mineral raw material to form a melt pool at the base of the furnace,
thereby forming a mineral melt, and
forming MMVF from the mineral melt;
wherein the metallic aluminium is in the form of (a) aluminium granulate or (b) one or more blocks;
wherein the aluminium granulate or blocks comprise from 45 to 100 wt% metallic aluminium.

2. The process of claim 1, further comprising consolidating the MMVF to form a consolidated product comprising the MMVF.

3. The process of any preceding claim, wherein the gas-fired furnace is a tank furnace or a cyclone furnace.

4. The process of any preceding claim, comprising introducing the metallic aluminium into or immediately above the melt pool.

5. The process of claim 4, wherein the metallic aluminium is injected directly into the mineral melt.

6. The process of any proceeding claim, wherein the metallic aluminium is in the form of aluminium granulate.

7. The process of claim 6, wherein the aluminium granulate has a mean particle diameter of no greater than 3 mm.

8. The process of any of claims 1 to 5, wherein the metallic aluminium is in the form of one or more blocks.

9. The process of claim 8, wherein the one or more blocks are rod-shaped.

10. The process of any preceding claim, wherein the MMVF have a ratio of FeO: Fe₂O₃ of above 2, such as above 3.

11. The process of any preceding claim, wherein the MMVF have a content of oxides, as wt. %, as follows:
| | |
|---|---|
| SiO₂ | 35 to 50 |
| Al₂O₃ | 12 to 30 |
| TiO₂ | up to 2 |
| Fe₂O₃ | 3 to 12 |
| CaO | 5 to 30 |
| MgO | up to 15 |
| Na₂O | 0 to 15 |
| K₂O | 0 to 15 |
| P₂O₅ | up to 3 |
| MnO | up to 3 |
| B₂O₃ | up to 3. |

12. The process of any of claims 1 to 10, wherein the MMVF have a content of oxides, as wt.%, as follows:
SiO₂: 30 to 51
CaO: 8 to 30
MgO: 2 to 25
FeO (including Fe₂O₃): 4 to 15
FeO+MgO: 10 to 30
Na₂O+K₂O: not more than 10
CaO+Na₂O+K₂O: 10 to 30
TiO₂: not more than 6
TiO₂+FeO: 4 to 18
B₂O₃: not more than 5
P₂O₅: not more than 8
Others: more than 8

13. The process of any of claims 1 to 10, wherein the MMVF have a content of oxides, as wt.%, as follows:
SiO₂ 39-55% preferably 39-52%
Al₂O₃ 16-27% preferably 16-26%
CaO 6-20% preferably 8-18%
MgO 1-5% preferably 1-4.9%
Na₂O 0-15% preferably 2-12%
K₂O 0-15% preferably 2-12%
R₂O (Na₂O + K₂O) 10-14.7% preferably 10-13.5%
P₂O₅ 0-3% preferably 0-2%
Fe₂O₃ (iron total) 3-15% preferably 3.2-8%
B₂O₃ 0-2% preferably 0-1%
TiO₂ 0-2% preferably 0.4-1%
Others 0-2.0%.

## Patentansprüche

1. Verfahren zum Herstellen künstlicher glasartiger Fasern (MMVF), die wenigstens 3 Gew.-% Eisenoxide umfassen, bestimmt als Fe₂O₃, umfassend:
Bereitstellen eines gasbefeuerten Ofens, eines mineralischen Rohmaterials, eines gasförmigen Brennstoffs und eines Verbrennungsgases,
wobei das mineralische Rohmaterial (a) metallisches Aluminium und (b) eine andere mineralische Komponente umfasst,
Einführen des mineralischen Rohmaterials, des gasförmigen Brennstoffs und des Verbrennungsgases in den Ofen,
Verbrennen des gasförmigen Brennstoffs, wodurch das mineralische Rohmaterial geschmolzen wird, um einen Schmelzpool an dem Boden des Ofens auszubilden,
wodurch eine Mineralschmelze ausgebildet wird, und
Ausbilden von MMVF aus der Mineralschmelze;
wobei das metallische Aluminium in der Form von (a) Aluminiumgranulat oder (b) einem oder mehreren Blöcken vorliegt;
wobei das Aluminiumgranulat oder die Blöcke 45 bis 100 Gew.-% metallisches Aluminium umfassen.

2. Verfahren nach Anspruch 1, ferner umfassend das Konsolidieren der MMVF, um ein konsolidiertes Produkt auszubilden, das den MMVF umfasst.

3. Verfahren nach einem der vorhergehenden Ansprüche, wobei der gasbefeuerte Ofen ein Wannenofen oder eine Zyklonfeuerung ist.

4. Verfahren nach einem der vorhergehenden Ansprüche, umfassend das Einführen des metallischen Aluminiums in oder unmittelbar oberhalb des Schmelzpools.

5. Verfahren nach Anspruch 4, wobei das metallische Aluminium direkt in die Mineralschmelze eingespritzt wird.

6. Verfahren nach einem der vorhergehenden Ansprüche, wobei das metallische Aluminium in der Form von Aluminiumgranulat vorliegt.

7. Verfahren nach Anspruch 6, wobei das Aluminiumgranulat einen mittleren Teilchendurchmesser von nicht mehr als 3 mm aufweist.

8. Verfahren nach einem der Ansprüche 1 bis 5, wobei das metallische Aluminium in der Form von einem oder Blöcken vorliegt.

9. Verfahren nach Anspruch 8, wobei der eine oder die mehreren Blöcke stabförmig sind.

10. Verfahren nach einem der vorhergehenden Ansprüche, wobei die MMVF ein Verhältnis von FeO : Fe₂O₃ von über 2, wie über 3 aufweisen.

11. Verfahren nach einem der vorhergehenden Ansprüche, wobei die MMVF einen Gehalt an Oxiden als Gew.-% wie folgt aufweisen:
| | |
|---|---|
| SiO₂ | 35 bis 50 |
| Al₂O₃ | 12 bis 30 |
| TiO₂ | bis zu 2 |
| Fe₂O₃ | 3 bis 12 |
| Cao | 5 bis 30 |
| MgO | bis zu 15 |
| Na₂O | 0 bis 15 |
| K₂O | 0 bis 15 |
| P₂O₅ | bis zu 3 |
| MnO | bis zu 3 |
| B₂O₃ | bis zu 3. |

12. Verfahren nach einem der Ansprüche 1 bis 10, wobei die MMVF einen Gehalt an Oxiden als Gew.-% wie folgt aufweisen:
| | |
|---|---|
| SiO₂: | 30 bis 51 |
| CaO: | 8 bis 30 |
| MgO: | 2 bis 25 |
| FeO (einschließlich Fe₂O₃): | 4 bis 15 |
| FeO+MgO: | 10 bis 30 |
| Na₂O+K₂O: | nicht mehr als 10 |
| CaO+Na₂O+K₂O: | 10 bis 30 |
| TiO₂: | nicht mehr als 6 |
| TiO₂+FeO: | 4 bis 18 |
| B₂O₃ | nicht mehr als 5 |
| P₂O₅: | nicht mehr als 8 |
| Sonstige: | mehr als 8 |

13. Verfahren nach einem der Ansprüche 1 bis 10, wobei die MMVF einen Gehalt an Oxiden als Gew.-% wie folgt aufweisen:
| | |
|---|---|
| SiO₂ | 39-55 % vorzugsweise 39-52 % |
| Al₂O₃ | 16-27 % vorzugsweise 16-26 % |
| Cao | 6-20 % vorzugsweise 8-18 % |
| MgO | 1-5 % vorzugsweise 1-4,9 % |
| Na₂O | 0-15 % vorzugsweise 2-12 % |
| K₂O | 0-15 % vorzugsweise 2-12 % |
| R₂O (Na₂O + K₂O) | 10-14,7 % vorzugsweise 10-13,5 % |
| P₂O₅ | 0-3 % vorzugsweise 0-2 % |
| Fe₂O₃ (Eisen insgesamt) | 3-15 % vorzugsweise 3,2-8 % |
| B₂O₃ | 0-2 % vorzugsweise 0-1 % |
| TiO₂ | 0-2 % vorzugsweise 0,4-1 % |
| Sonstige | 0-2,0 %. |

## Revendications

1. Procédé de fabrication de fibres vitreuses synthétiques (FVS) qui comprennent au moins 3 % en poids d'oxydes de fer sous forme de Fe₂O₃, comprenant
la fourniture d'un four à gaz, d'un matériau minéral brut, d'un combustible gazeux et d'un gaz de combustion,
où le matériau minéral brut comprend (a) de l'aluminium métallique et (b) un autre composant minéral,
l'introduction du matériau minéral brut, du combustible gazeux et du gaz de combustion dans le four,
la combustion du combustible gazeux, entraînant ainsi la fonte du matériau minéral brut pour former un bain de fusion à la base du four,
formant ainsi un matériau minéral fondu et
formant des FVS à partir du matériau minéral fondu ;
où l'aluminium métallique est sous la forme de (a) granulats d'aluminium ou (b) un ou plusieurs blocs ;
ou les granulats ou blocs d'aluminium comprennent de 45 à 100 % en poids d'aluminium métallique.

2. Procédé de la revendication 1 comprenant en outre la consolidation des FVS pour former un produit consolidé comprenant les FVS.

3. Procédé de l'une quelconque des revendications précédentes, où le four à gaz est un four à cuve ou un four cyclone.

4. Procédé de l'une quelconque des revendications précédentes comprenant l'introduction de l'aluminium métallique dans le bain de fusion ou immédiatement en dessus de celui-ci.

5. Procédé de la revendication 4, où l'aluminium métallique est injecté directement dans le matériau minéral fondu.

6. Procédé de l'une quelconque des revendications précédentes, où l'aluminium métallique est sous la forme de granulats d'aluminium.

7. Procédé de la revendication 6, où les granulats d'aluminium ont un diamètre particulaire moyen qui ne dépasse pas 3 mm.

8. Procédé de l'une quelconque des revendications 1 à 5, où l'aluminium métallique est sous la forme de un ou plusieurs blocs.

9. Procédé de la revendication 8, où les un ou plusieurs blocs sont en forme de bâtonnets.

10. Procédé de l'une quelconque des revendications précédentes, où les FVS présentent un rapport FeO:Fe₂O₃ supérieur à 2, par exemple supérieur à 3.

11. Procédé de l'une quelconque des revendications précédentes, où une teneur en oxydes des FVS, exprimée en % en poids, est comme suit :
| | |
|---|---|
| SiO₂ | 35 à 50 |
| Al₂O₃ | 12 à 30 |
| TiO₂ | jusqu'à 2 |
| Fe₂O₃ | 3 à 12 |
| CaO | 5 à 30 |
| MgO | jusqu'à 15 |
| Na₂O | 0 à 15 |
| K₂O | 0 à 15 |
| P₂O₅ | jusqu'à 3 |
| MnO | jusqu'à 3 |
| B₂O₃ | jusqu'à 3. |

12. Procédé de l'une quelconque des revendications 1 à 10, où une teneur en oxydes des FVS, exprimée en % en poids, est comme suit :
SiO₂ : 30 à 51
CaO : 8 à 30
MgO : 2 à 25
FeO (y compris Fe₂O₃) : 4 à 15
FeO+MgO : 10 à 30
Na₂O+K₂O : pas plus de 10
CaO+Na₂O+K₂O : 10 à 30
HO₂ : pas plus de 6
TiO₂+FeO : 4 à 18
B₂O₃ : pas plus de 5
P₂O₅ : pas plus de 8
Autres : plus de 8.

13. Procédé de l'une quelconque des revendications 1 à 10, où une teneur en oxydes des FVS, exprimée en % en poids, est comme suit :
| | |
|---|---|
| SiO₂ | 39-55 %, préférablement 39-52 % |
| Al₂O₃ | 16-27 %, préférablement 16-26 % |
| CaO | 6-20 %, préférablement 8-18 % |
| MgO | 1-5 %, préférablement 1-4,9 % |
| Na₂O | 0-15 %, préférablement 2-12 % |
| K₂O | 0-15 %, préférablement 2-12 % |
| R₂O (N Na₂O + K₂O) | 10-14,7 %, préférablement 10-13,5 % |
| P₂O₅ | 0-3 %, préférablement 0-2 % |
| Fe₂O₃ (fer total) | 3-15 %, préférablement 3,2-8 % |
| B₂O₃ | 0-2 %, préférablement 0-1 % |
| TiO₂ | 0-2 %, préférablement 0,4-1 % |
| Autres | 0-2,0 %. |
